# EUROPEAN PATENT APPLICATION

(11) **EP 4 707 946 A1**
(43) Date of publication of application: **11.03.2026**
(21) Application number: 24199124.9
(22) Date of filing: 09.09.2024
(51) Int. Cl.: G04B 17/04, F16C 11/12, G04B 31/02

(54) **FLEXURE BASED MECHANISM WITH REDUCED STIFFNESS**

(71) Applicant: ECOLE POLYTECHNIQUE FEDERALE DE LAUSANNE (EPFL), 1015 Lausanne (CH)
(72) Inventor: TISSOT-DAGUETTE, Loïc, 1400 Yverdon-les-Bains (CH); HENEIN, Simon, 2000 Neuchâtel (CH)
(74) Representative: e-Patent SA

(57) **Abstract**

Flexure based mechanism (1), comprising:
- a first body (3) supported on a second body (5) by a guide arrangement (7) comprising at least one flexure arranged so as to permit said main body (3) to displace relatively to said second body (5) from a neutral position according to at least one degree of freedom and subject to a restoring force acting in said at least one degree of freedom and directed towards said neutral position, one of said first body (3) and said second body (5) being a fixed support;
- at least one preloaded buckled beam (9) arranged to apply a compensating force to said first body (3), said compensating force having a component acting in said at least one degree of freedom in a positive proportional relationship to a displacement of said first body (3) from said neutral position.

According to the invention, said at least one preloaded buckled beam (9) is attached to a preloading structure (10) comprising a preloading body (11) supported by at least two preloading beams (13) preloaded so as to apply said compensating force, said at least two preloading beams (13) extending from opposite sides of said preloading body (11) in a chevron configuration, said chevron configuration defining an apex directed towards said at least one preloaded buckled beam (9).

## Description

### Technical Field

The present invention relates to the field of flexure mechanisms comprising at least one preloaded buckled beam arranged to reduce the intrinsic stiffness of a guide arrangement without decreasing the stiffness of the supports of the guide arrangement. Such flexure pivot mechanisms have a particular application in oscillator mechanisms, particularly in horological oscillator mechanisms, but other applications are also possible, such as mechanical sensors for force, acceleration or similar, linear or rotating stages for MEMS actuators or sensors such as electrostatic actuators (comb drive), electrothermal actuators, accelerometers and gyros, energy harvesters, etc.

### State of the Art

At macroscale, the preloading of mechanisms for stiffness reduction or to enable nonlinear characteristics (e.g., bistability) is easily performed using manual stages (see, for instance, Zanaty, M., Fussinger, T., Rogg, A., Lovera, A., Lambelet, D., Vardi, I., Wolfensberger, T. J., Baur, C., and Henein, S. (2019), "Programmable Multistable Mechanisms for Safe Surgical Puncturing," J. Med. Devices, 13(2), 021002, https://doi.org/10.1115/1.4043016 and Smreczak, M., Tissot-Daguette, L., Thalmann, E., Baur, C., Henein, S. (2022), "A load cell with adjustable stiffness and zero offset tuning dedicated to electrical micro- and nanoprobing," Precision Engineering, 76, pp. 208-225, https://doi.org/10.1016/j.precisioneng.2022.03.009), loading spacers (see Zhao, H., Han, D., Zhang, L., and Bi, S. (2017), "Design of a stiffness-adjustable compliant linear-motion mechanism," Precision Engineering, 48, pp. 305-314, https://doi.org/10.1016/j.precisioneng.2016.12.013) or actuators (see Wu, Y., and Lan, C. (2014), "Linear Variable-Stiffness Mechanisms Based on Preloaded Curved Beams," J. Mech. Des., 136(12): 122302, https://doi.org/10.1115/1.4028705).

However, at microscale, i.e. scales of the order of several mm or less, conventional preloading is usually avoided due to the limitation of space, adjustment precision and the risk of damaging the device. Residual stress, on the other hand, can be highly beneficial to permanently preload micro mechanisms for stiffness reduction (see Kuppens, P. R., Herder, J. L., and Tolou, N. (2019), "Permanent Stiffness Reduction by Thermal Oxidation of Silicon," Journal of Microelectromechanical Systems, 28(5), pp. 900-909, https://doi.org/10.1109/JMEMS.2019.2935379) or to generate bistable deflections (Vangbo, M., and Bäcklund, Y. (1998), "A lateral symmetrically bistable buckled beam," Journal of Micromechanics and Microengineering, 8(1), pp. 29, https://dx.doi.org/10.1088/0960-1317/8/1/005). In particular, no power consumption is required after manufacturing to maintain the preload, compared, for example, to piezo electric actuators, electrostatic actuators and thermal actuators.

However, the primary disadvantage of residual stress is often its limited preloading strain. For instance, silicon beams prestressed by thermal oxidation have usually a longitudinal strain that does not exceed 0.1 %. This results in small buckling deflection if the beams are fixed at both ends to the substrate and/or in minimal stroke for flexure mechanisms. Moreover, if the preloading strain is in the order of plastic deformations that take place during the post-oxidation cooling phase, there is a risk of relatively large uncontrolled actuation force offsets in the case in which the mechanism is not symmetrical.

In the case of mechanical oscillators, flexure pivots have become an interesting replacement for traditional hairspring-balance wheel oscillators used in timepieces as they provide both a restoring torque and a guided rotation of the inertial mass, e.g. a balance. Furthermore, since the rotation guidance of flexure pivot oscillators exhibits no dry friction, they usually have a significantly higher quality factor compared to bearing-based oscillators, with the result that less energy is then required to maintain the oscillation and the chronometric performance is enhanced. Furthermore, since such flexure pivots do not have frictional contact parts, no lubrication is required, and they are hence maintenance free.

Examples of such of flexure-based oscillator mechanisms are disclosed in EP 3 548 973 B1, WO 2017/157712 A1, WO 2019/141789 A1, US 2022/0137560 A1, WO 2020/016131 A1, EP 4 047 424 A1, CH 717996 A2, WO 2016/096677 A1, WO 2019/156552 A1, EP 3 382 470 B1, EP 3 722 888 B1 and EP 2 911 012 B1. However, most of these exhibit a high oscillating frequency (>15 Hz) compared to conventional hairspring - balance oscillators (typically ~4 Hz). Since energy must be provided by an escapement to the oscillator at each alternance or oscillation, the high frequency of flexure-based oscillators leads to high accelerations and decelerations of the gear train leading to high energy loss due kinetic energy losses as well as air and bearing friction, which decreases the power reserve of the timepiece. High frequencies also present the drawback of leading to mechanisms where the movement is too fast to be visible to the naked eye.

The standard solution to minimize the oscillation frequency results in designing such flexure pivot based oscillators with relatively thin guide beams to reduce their stiffness, and relatively high inertia for the oscillating inertial mass. However, the blade thickness is limited by the fabrication technology and the support stiffness is also impacted. If the support stiffness is low and the inertia is high, in certain cases, accelerations, vibrations, shocks can break the oscillator. There is hence a trade-off between the oscillator frequency, the manufacturing capabilities and the sensitivity of the oscillator to external accelerations.

An aim of the present invention is to at least partially overcome the disadvantage of the prior art, by proposing a flexure-based mechanism comprising a relatively simple preloading mechanism that can reduce the stiffness of a flexure-based guide arrangement.

### Disclosure of the invention

More precisely, the invention relates to a flexure based mechanism as defined in claim 1. This flexure based mechanism comprises:
- a first body supported on a second body by a guide arrangement comprising at least one flexure (such as a blade flexure, but other types are also possible) arranged so as to permit said main body to displace relatively to said second body from a neutral position according to at least one degree of freedom in rotation or translation and subject to a restoring force (which may be a simple force acting in translation or a force acting so as to apply a torque) acting in said at least one degree of freedom and directed towards said neutral position, this restoring force either being provided by an inherent stiffness of said guide arrangement or via other means (supplementary elastic elements, gravity or similar), one of said first body and said second body being a fixed support, the other being movable with respect thereto;
- at least one preloaded buckled beam (i.e. a flexible beam which has been caused to first-order buckle by a preloading force) arranged to directly or indirectly apply a compensating force (which may be a simple force acting in translation or a force acting so as to apply a torque) to said first body, said compensating force having a component acting in said at least one degree of freedom in a positive proportional relationship to an angular or linear (as appropriate) displacement of said first body from said neutral position, that is to say that said component of said compensating force increases with increasing relative displacement of said first and second bodies in said degree of freedom, at least for a certain predetermined amplitude of said relative displacement.

According to the invention, said at least one preloaded buckled beam is attached to a preloading structure comprising a preloading body supported by at least two preloading beams preloaded so as to apply said compensating force, said at least two preloading beams extending from opposite sides of said preloading body (these extending to the second body or to a further preloading body attached to the second body) in a chevron configuration, said chevron configuration defining an apex directed towards said at least one preloaded buckled beam, i.e. the preloading beams "point" towards the first body. Expressed differently, if one were to consider a line following the force vector of the compensating force applied by the at least one preloaded buckled beam to the first body when it is in its neutral position, in which said compensating force has a component with a value of zero considered in said degree of freedom, the extremities of the preloading beams which are attached to the preloading body are closer to the first body than their extremities which are not, considered in projection onto this line.

This arrangement reduces the overall stiffness of the relative displacement between the first and second bodies, is relatively simple to put into practice, and the chevron configuration of the preloading beams generates the prestress in the preloaded buckled beam indirectly, which provides a greater degree of control thereof. This arrangement is particularly advantageous when the preloading beams are stressed by e.g. a surface treatment of a micro-machinable material such as silicon which induces residual stresses therein, such as an oxidation or ion implantation treatment, since it does not require any externally-controlled moving parts to apply this stress, although it is entirely possible to provide said stress in such a manner, e.g. with cams, screws or similar serving to cause the outer extremities of the preloading beams to approach each other.

Advantageously, said preloading beams are arranged symmetrically, although this does not have to be the case.

In an embodiment, said at least one degree of freedom is in translation substantially perpendicular to the direction in which said compensating force is applied to said first body when this latter is in its neutral position.

Advantageously, one or multiple pairs of said preloaded buckled beams have equivalent dimensions and opposite buckling directions in order to compensate their respective reaction moment applied to said first body when said first body is in its neutral position with respect to said second body.

In another embodiment, said at least one degree of freedom is in rotation about an axis (A), said at least one preloaded buckled beam being attached to said first body such that the direction in which said compensating force is applied to said first body when in its neutral position is directed substantially towards said axis (A), with the result that the moment it applies to the first body is substantially zero when the first body is in its neutral relative position with respect to the second body if pairs of preloaded buckled beams with opposite buckling directions are employed (see previous paragraph).

Advantageously, the mechanism further comprises an intermediate body upon which said compensating force acts, said intermediate body being linked to said first body by a connecting body (preferably a flexure such as a blade flexure or a rigid beam with blade or notch flexures at each end) and supported on said second body by a secondary guide arrangement adapted to provide substantially one degree of freedom in rotation or in translation to said intermediate body. As a result, the compensating force acts indirectly on the first body, the intermediate body having a quadratic motion with respect to the motion of the first body with respect to the second body, with the result that the compensating force which is applied to the first body has a substantially linear development in proportion to the displacement of the first body with respect to the second body from their neutral position.

Advantageously, the mechanism also comprises a further preloaded buckled beam arranged to apply a further compensating force to said first body under the effect of a further preloading structure comprising a further preloading body supported by at least two further preloading beams preloaded so as to cause said further preloaded buckled beam to apply said further compensating force, said at least two further preloading beams extending from opposite sides of said further preloading body analogously to the preloading beams discussed above.

Advantageously, the mechanism also comprises a further intermediate body upon which said further compensating force acts, said further intermediate body being linked to said first body and being supported on said second body by a further secondary guide arrangement adapted to provide substantially one degree of freedom in rotation or in translation to said further intermediate body. This provides the substantially linear development of the further compensating force, analogous to the previously-discussed compensating force.

Advantageously, said intermediate body is linked to a first secondary intermediate body by a first further buckled beam and to a second secondary intermediate body by a first coupling beam, said further intermediate body being linked to said first secondary intermediate body by a second further buckled beam and to said first further intermediate body by a second coupling beam, said guide arrangement comprising a plurality of flexures extending from said first body to a respective each of said intermediate body, further intermediate body, first secondary intermediate body and second secondary intermediate body, each of said intermediate bodies and said secondary intermediate bodies being supported on said second body by a corresponding secondary guide arrangement arranged to provide substantially one degree of freedom in rotation. This arrangement is particularly suitable for use in a mechanical horological oscillator.

In another embodiment, also particularly suitable for use in a mechanical horological oscillator, four intermediate bodies are provided distributed around an axis of rotation of said first body, each intermediate body being linked to a corresponding preloaded buckled beam attached to a corresponding preloading structure and each provided with a corresponding secondary guide arrangement arranged to provide substantially one degree of freedom in rotation to the corresponding intermediate body, each intermediate body being linked to each of the two intermediate bodies adjacent thereto by a corresponding coupling beam, said guide arrangement comprising a plurality of flexures, a corresponding flexure extending between each intermediate body and said first body.

Advantageously, at least one of said guide arrangements and/or said connecting body, if present, is implemented by at least one flexure.

Advantageously, the mechanism is constructed of surface-treated silicon, this being easily micromachined and a surface treatment such as oxidation or ion implantation induces a residual stress in the silicon, prestressing the preloading beams.

The mechanism of the invention is advantageously integrated into a horological oscillator.

The invention furthermore relates to a method of manufacturing a flexure based mechanism as defined above, comprising steps of:
- fabrication of said flexure based mechanism such that said preloading beams are not preloaded;
- carrying out a surface treatment of said preloading beams so as to induce residual stress therein and thereby to preload said preloading beams.

No mechanically-adjustable components are hence required to generate the preload in the preloading beams and hence in the preloaded buckled beam.

Advantageously, said at least one buckled beam is curved in a predetermined direction when said preloading beams are not preloaded. This results in a repeatable and predictable direction of buckling of the at least one buckled beam when it is preloaded.

### Brief description of the drawings

Further details of the invention will become apparent upon reading the detailed description, in reference to the appended drawings in which:
- Figure 1 is a schematic representation of a flexure based mechanism according to a non-limiting embodiment of the invention, prior to the preloading structure being stressed;
- Figure 2 is a schematic representation of the mechanism of figure 1 in its neutral position, with the preloading structure stressed;
- Figure 3 is a schematic representation of the mechanism of figure 2 with the preloading structure stressed and the first body displaced from its neutral position;
- Figure 4 is a schematic representation of the mechanism of figure 2 with the preloading structure stressed and the first body displaced from its neutral position such that the buckled beams are subject to another mode of buckling;
- Figure 5 is a schematic representation of a variation of the mechanism of figure 2 in its neutral position, with the preloading structure stressed, the first body having a single degree of freedom in rotation;
- Figure 6 is a schematic representation of a variation of the mechanism of figure 2 in its displaced position, with two preloading structures acting in opposite directions;
- Figure 7 is a schematic representation of a variation of the mechanism of figure 6 in its displaced position, the first body having a single degree of freedom in rotation and the two preloading structures acting orthogonally to each other;
- Figure 8 is a schematic representation of a variation of the mechanism of figure 5, the preloading beams being preloaded by further preloading structures;
- Figure 9 is a schematic representation of a variation of a mechanism according to figure 2 in its displaced position, an intermediate body and connecting body being interposed between the first body and the buckled beam;
- Figure 10 is a schematic representation of a variation of a mechanism according to figure 9 in its neutral position, first body having a single degree of freedom in rotation;
- Figure 11 is a schematic representation of a variation of a mechanism according to figure 9 in its neutral position, the intermediate body being mounted to pivot;
- Figure 12 is a schematic representation of a purely flexure-based variant of the mechanism according to figure 9;
- Figure 13 is a schematic representation of a purely flexure-based variant of the mechanism according to figure 2, in its displaced position;
- Figure 14 is a schematic representation of a purely flexure-based variant of the mechanism according to figure 5, in its displaced position;
- Figure 15 is a schematic representation of a purely flexure-based oscillator comprising two mechanisms according to the invention, arranged orthogonally to each other;
- Figure 16 is a schematic representation of another variant of a purely flexure-based oscillator comprising two mechanisms according to the invention, arranged facing each other;
- Figure 17 is a schematic representation of yet another variant of a purely flexure-based oscillator, comprising four mechanisms according to the invention.

### Embodiments of the invention

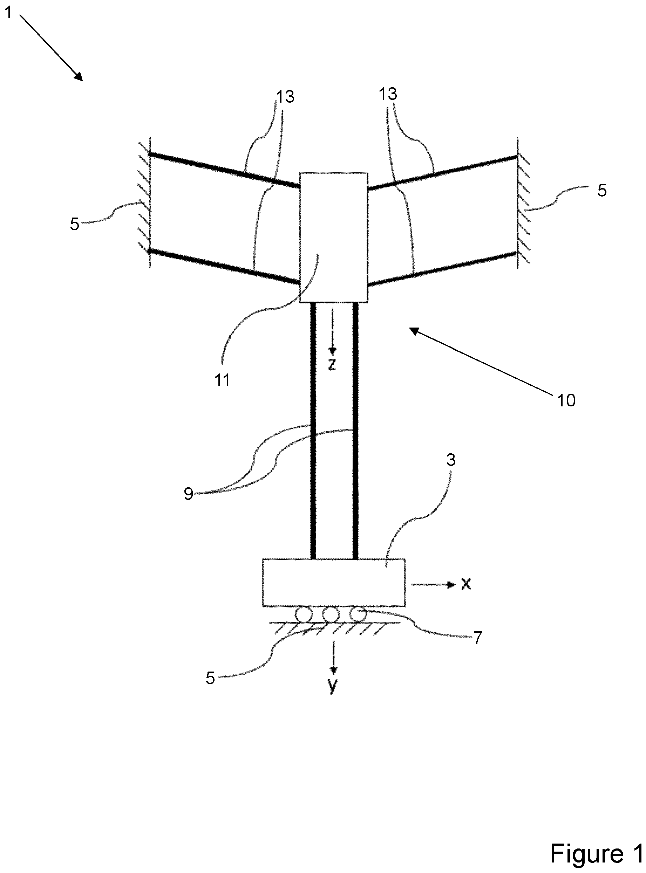

Figures 1-4 illustrate a flexure based mechanism 1 (hereafter simply "mechanism 1" to facilitate reading) according to a non-limiting embodiment of the invention.

Globally, mechanism 1 comprises a first body 3 which is movable with respect to a second body 5 according to at least one degree of freedom, which may be in translation and/or rotation. As illustrated, second body 5 is a fixed support or is attached to a fixed support, illustrated schematically, whereas first body 3 is a movable element. However, the opposite configuration is also possible, i.e. that first body 3 is a fixed support or is attached to a fixed support, and the second body 5 is movable with respect thereto. This applies for all the embodiments illustrated, although for ease of comprehension, typically only the case of the first body 3 being mobile will be illustrated in the figures and discussed in the text, and the opposite situation should be clearly understandable to the reader.

First body 3 is mounted to second body 5 via a guide arrangement 7, illustrated schematically and functionally by rollers permitting a single degree of freedom in translation in the x direction, although it should be understood as representing any suitable type of flexure or conventional guide arrangement with one or more degrees of freedom in translation and/or in rotation, which joins the first body 3 to the second body 5 either directly or indirectly via one or more other elements. Guide arrangement 7 has an inherent stiffness, which applies a restoring force urging the first body 3 towards its neutral position with respect to second body 5 (or inversely, in the opposite case that the first body 3 is fixed and second body 5 is mobile). This stiffness is either a function of the elements of the guide arrangement 7 itself, such as flexures, but other ways of applying this restoring force within the guide arrangement 7, such as further elastic elements, gravity-exploiting arrangements or similar, are also possible.

In order to reduce the inherent stiffness of the mechanism (i.e. the restoring force) without modifying or redesigning the flexible elements of the guide arrangement 7, at least one preloaded buckled beam 9 is provided. As illustrated, a pair of preloaded buckled beams 9 are provided, which extend adjacent to one another.

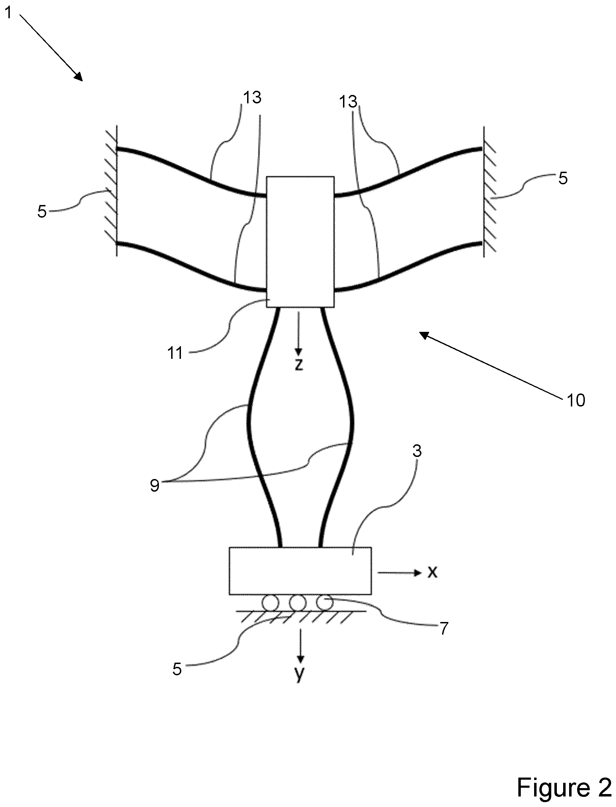

The at least one buckled beam 9 is attached at a first extremity to the first body 3 such that, when the buckled beams 9 are in a compression-stressed, i.e. buckled state (as in figures 2 and 3; figure 1 illustrates the situation before stress is applied), specifically a second-mode buckling state, they apply a compensating force to the first body 3 which has a component acting according to the at least one degree of freedom of movement of the first body 3 relative to the second body 5 which is positively proportional to the displacement of the first body 3 from its neutral position with respect to the second body 5. As a result, the compensating force applied by the at least one buckled beam 9 to the first body 3 acts in an opposite direction to the inherent stiffness of the guide arrangement 7 (which acts to return the first body 3 to its neutral position), reducing the overall stiffness, i.e. restoring force, to which the first body 3 is subject. Indeed, if the compensating force provided by the buckled beams 9 is high enough, it can completely overcome the inherent stiffness of the guide arrangement 7, rendering the mechanism zero-stiffness or negative-stiffness, i.e. bistable. This principle of applying a compensating force to vary the overall stiffness to which a movable element is subject is known per se in EP3722888B1, EP4012367A1 and other references cited above, and need not be described in detail.

The other extremity of the at least one buckled beam 9 is attached to a preloading structure 10, arranged to apply the force to cause the at least one buckled beam 9 to buckle. This preloading structure 10 comprises a preloading body 11, to which an extremity of the at least one buckled beam 9 is attached, such that the beam or beams 9 connect the first body 3 to the preloading body 11, and a plurality of preloading beams 13 that will be described in more detail below.

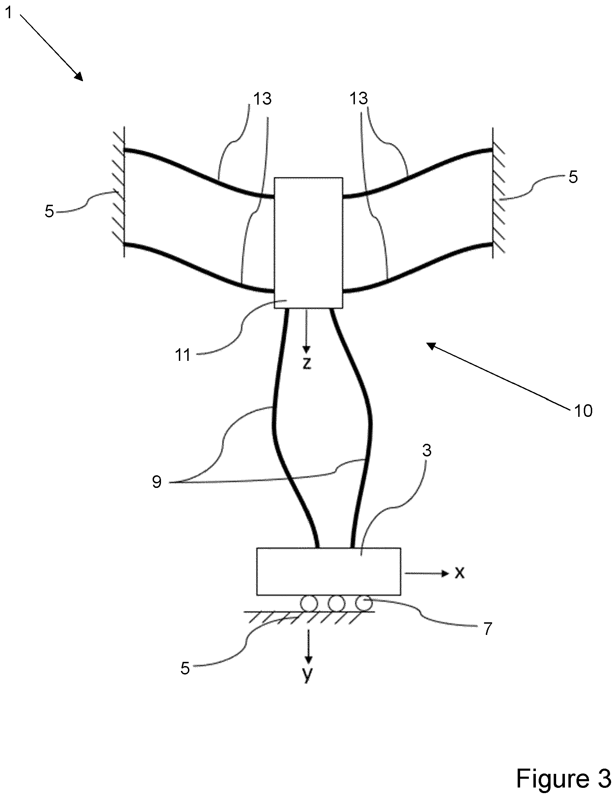

In order to apply a force between the preloading body 11 and the first body 3, the preloading body 11 is attached to the second body 5 via a plurality of preloading beams 13 which extend from opposite faces of the preloading body 11 to the second body 5, arranged so as to displace the preloading body 11 from its position in an unstressed state (as illustrated in figure 1) in the direction of the first body 3 and thereby cause the beams 9 to buckle and apply the compensating force to the first body 3 as discussed above. In the unstressed state, a slight predetermined curvature in a predetermined direction can be given to the beams 9 such that, when the preload is applied, they buckle in a predetermined direction, as illustrated in figures 2 and 3, in which they have buckled symmetrically in opposite directions, such that the compensating force applied has the same magnitude irrespective of the direction of displacement of the first body 3 and the reaction moment applied by each of the buckled beams 9 to the first body 3 cancel out when the mechanism 1 is in its neutral position. However, buckling in the same direction is also possible, particularly in the case in which the degree of freedom of movement of the first body 3 is in a single direction from its neutral position, or if its degree of freedom is in translation.

The preloading beams 13 are illustrated as blade flexures arranged symmetrically, but they may be substituted by their well-known equivalents of rigid beams bracketed by blade flexures or notch flexures, as is generally known, and symmetry in either the number of preloading beams 13 on each side of the preloading body or in their positioning. In any case, the preloading beams 13 are arranged in a chevron configuration, i.e. a "V" configuration, with the apex of the V or chevron directed towards the first body 3 when this latter is in its neutral position.

The preloading beams 13 are subjected to a prestress, which can be generated in any convenient manner, such as by mechanically modifying the position of their attachment points with the second body 5, e.g. by a cam or screw mechanism causing their extremities to be brought closer together, or by a treatment of the material of the preloading beams 13 so as to induce a residual stress.

This latter possibility is particularly advantageous in the case in which the mechanism 1, or at least the preloading structure defined by the preloading beams 13 and the preloading body 11, is made of a micromachinable material such as silicon. In such a case, a thermal oxidation of the silicon introduces internal stresses in the preloading beams 13, causing them to lengthen and displace the preloading body 11 in the z direction towards the first body 3. The same phenomenon also occurs with other processes such as ion implantation.

The angle of the preloading beams 13 with respect to the z direction, which can be defined as the direction of movement of the centroid of the preloading body 11 in function of varying stress in the preloading beams 13 or the direction of the compensating force vector when the first body 3 is in its neutral position, is greater than 90°, considered in the direction of the first body 3. More specifically, this angle is in the range of 90.01° to 110°, more preferably 95° to 110°, even more preferably from 100° to 110°. This has the effect of multiplying the strain in the preloading beams 13 due to the angular relationship between the preloading beams 13 and the z direction, meaning that the small displacement of the extremities of the preloading beams 13 along their own axes results in a greater displacement of the preloading structure in the z direction, which can be precisely controlled.

By varying this angle, the number and geometry of the preloading beams 13, as well as the degree of stress induced in the preloading beams, the preloading displacement in the z direction applied to the buckled beams can hence be varied according to need.

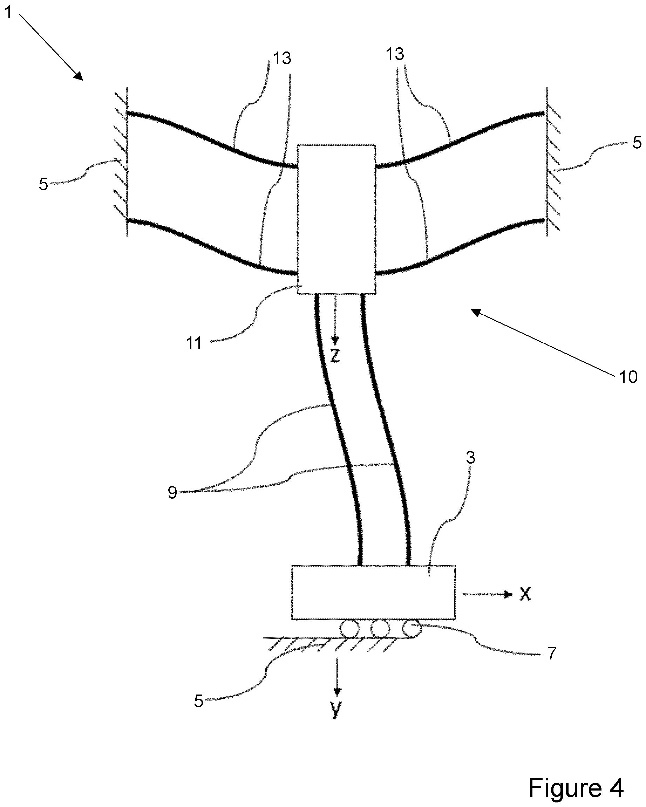

In terms of the amplitude of relative displacement of the first body 3 that is achievable, this depends on the geometry of the various elements of the mechanism 1, and on the preloading displacement applied to the buckled beams 9. Figure 4 illustrates the amplitude of displacement of the first body 3 from its neutral position having exceeded this limit, the buckled beams 3 having changed from a second-order buckling in different directions (as in figures 2 and 3), to a first-order buckling in the same direction, and as a result the force applied by the buckled beams 9 to the first body 3 is no longer proportional to the displacement of this latter in its degree of freedom, and the overall stiffness is no longer reduced.

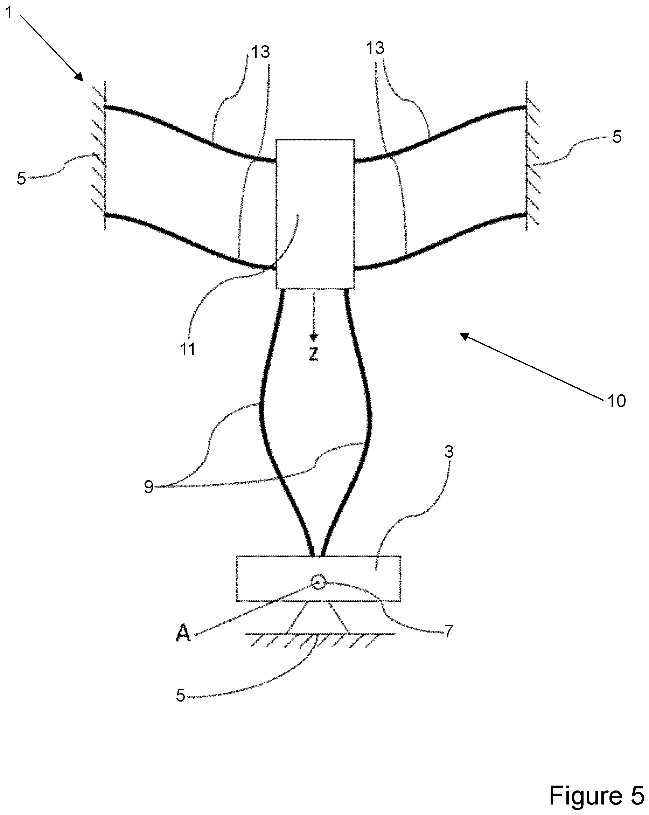

Figure 5 illustrates the same principle applied to a first body 3 adapted to rotate about a pivot axis A with respect to second body 5, pivot axis A being defined by guide arrangement 7 which may comprise a conventional bearing or a flexure pivot of any convenient type such as a Remote Centre Compliance (RCC) pivot or similar. As before, second body 5 is a fixed support and first body 3 is rotatable with respect thereto, but the opposite configuration is again possible, with first body 3 being a fixed support and second body 5 being rotatable with respect thereto.

In this case, the force applied by the buckled beams 9 to the first body 3 acts in such a way as to be positively proportional to displacement of the first body 3 in its degree of freedom, i.e. in rotation about axis A, this force acting so as to apply a moment to the first body 3 acting in the opposite direction to the restoring force applied by the inherent stiffness of the guide arrangement 7. In the present case, both the force applied by the buckled beams 9 and the force applied by the inherent stiffness of the guide arrangement 7 act at a distance from axis A and hence generate torques, as is generally understood.

To this end, the buckled beams 9 are, in their unstressed state (not illustrated), in a V-configuration, their extremities which are connected to the first body 3 being situated closer together than their extremities which are connected to the preloading body 11, the z-axis of the preloading structure being substantially aligned with the angular bisector of the buckled beams 9 when the mechanism 1 is in its neutral position. Again, the overall angular stiffness of the mechanism 1 about the axis A can be positive, zero or negative (bistable).

In view of the foregoing, it is clear that, if the movable body 3, 5 (as appropriate) has inertia, translational or rotational oscillators can be created which have an eigenfrequency which is lower than that which would be obtained without the buckled beams 9 and preloading structure 11, 13, all else being equal.

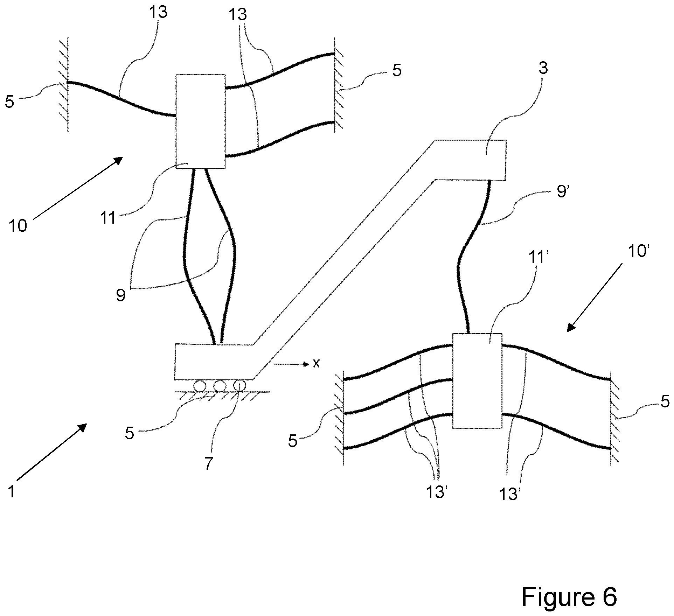

Figure 6 illustrates a variation of the mechanism 1 of figures 1-4, first body 3 having been displaced from its neutral position to the right (according to the orientation of the figure). In this variant, a further at least one buckled beam 9' (here a single further buckled beam b), attached to the preloading body 11' of a further preloading structure 10', the further preloading body 11' being attached to the second body 5 via a plurality of further preloading beams 13', in a manner analogous to the preloading body 10 of figures 1-4 but oriented in the opposite direction and offset parallel to the x direction. As can be seen, the preloading structure 10 has three preloading beams 13, arranged two on one side and one on the other side of the preloading body 11, whereas the further preloading structure 10' has five further preloading beams 13', arranged three on one side and two on the other side of the further preloading body 11', to illustrate that the number of preloading beams 13, 13' can be chosen at will.

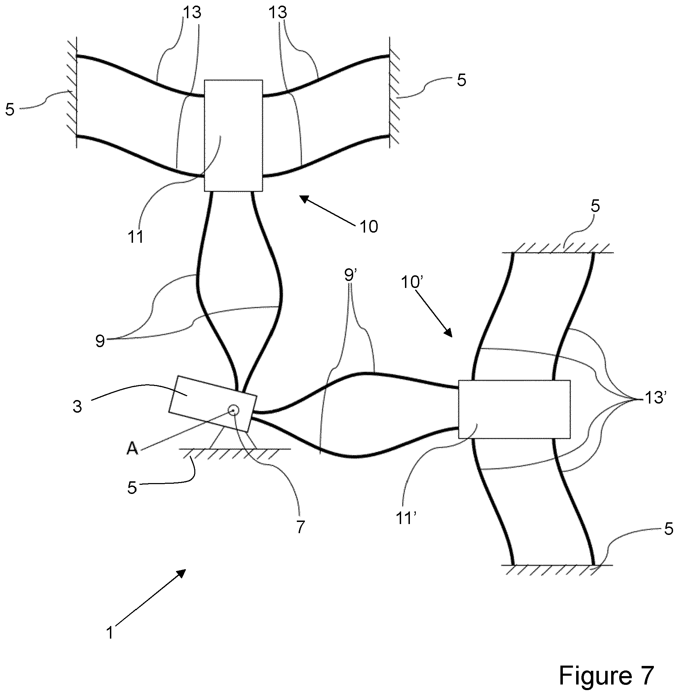

Figure 7, analogously to figure 6, illustrates a variation of the mechanism 1 of figure 5, in which further buckled beams 9' and a further preloading structure 10' are provided, arranged at 90° to the arrangement of figure 5, considered when the mechanism 1 is in its neutral position. In figure 7, the first body 3 is illustrated displaced in rotation from its neutral position.

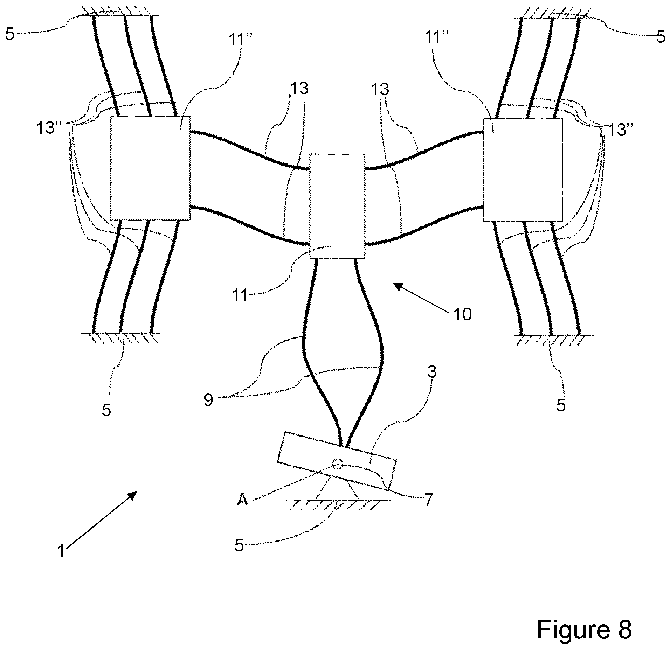

Figure 8 illustrates a further variation on the mechanism of figure 5, the first body 3 having been displaced in rotation from its neutral position. In this case, rather than being directly connected to the second body 5, the preloading beams 13 are attached to further preloading bodies 11", which are analogous to the preloading body 11 and are attached to second body 5 by further preloading beams 13", again analogous to the preloading beams 13, and acting substantially perpendicularly to preloading beams 13. As illustrated, the arrangements of further preloading structures (each comprised of respective further preloading beams 13" and further preloading bodies 11") are arranged symmetrically, but it is possible to provide them on only one side of the preloading body 11. The same considerations as previously expressed in the context of preloading beams 13 equally apply to further preloading beams 13".

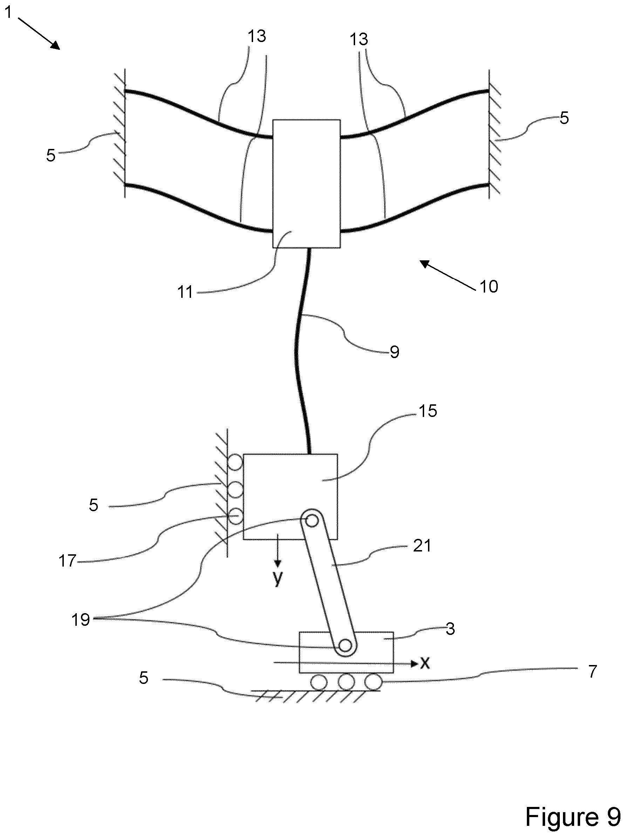

Figure 9 illustrates a yet further variation of a mechanism 1 according to figures 1-4, first body 3 having been displaced from its neutral position. In this case, the at least one buckled beam 9 is not connected directly to the first body 3 so as to apply a force thereto with the previously-discussed proportionality in respect of displacement of the first body 3 from its neutral position, but indirectly via an intermediate body 15, which is arranged in this embodiment to have a quadratic translatory motion substantially perpendicular to the motion of the first body 3, which is illustrated as having been displaced to the right from its neutral position. Intermediate body 15 is provided with its own secondary guide arrangement 17, which may be conventional or flexure-based as for the guide arrangement 7, and intermediate body 15 is pivotably linked to the first body 3 via a connecting body 21, such as a rod, beam or similar, pivotally mounted on each of the intermediate body 15 and the first body 3 via corresponding conventional or flexure pivots 19. Typically, connecting body 21 would be a substantially rigid beam provided with a pair of blade or notch flexures, one situated at either end thereof.

Since it is known that buckled beams in general apply a nearly constant axial force, this force can be applied to the intermediate body 15 which in turn will increase or reduce the effective stiffness of the first body 3. This is because the potential energy provided by the buckled beam 9 is quadratic with respect to the first body 3 displacement, similar to a spring. The buckled beam 9 hence brings an additional nearly constant compensatory stiffness characteristics to the first body 3, within a predetermined range of displacements of this latter, which has a negative value as described previously.

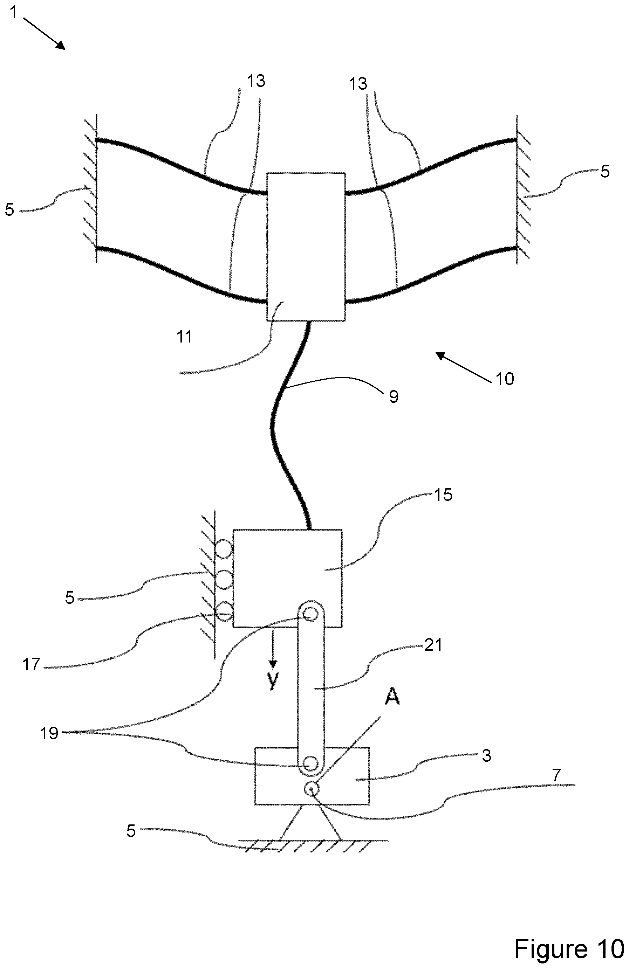

Figure 10 illustrates the principle of the intermediate body 15 and connecting body 21 of figure 9 as applied to the embodiment of figure 5, in its neutral position and with a single buckled beam 9.

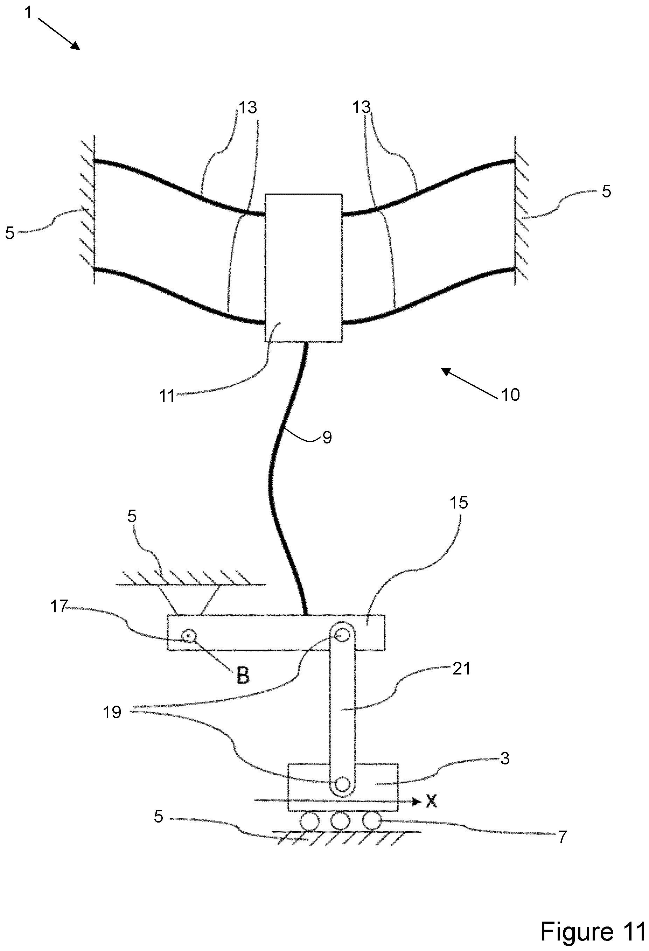

Figure 11 illustrates a variant of the embodiment of figure 9, where the intermediate body 15 is pivotably mounted about an axis B, the buckled beam 9 being attached to intermediate body 15 at a convenient location. In this illustration, the first body 3 is in its neutral position.

This same principle can equally be applied with a rotating first body 3 as in figures 5 or 10, in which case the buckled beam 9 is only subjected to the second order effects of rotation of the first body 3.

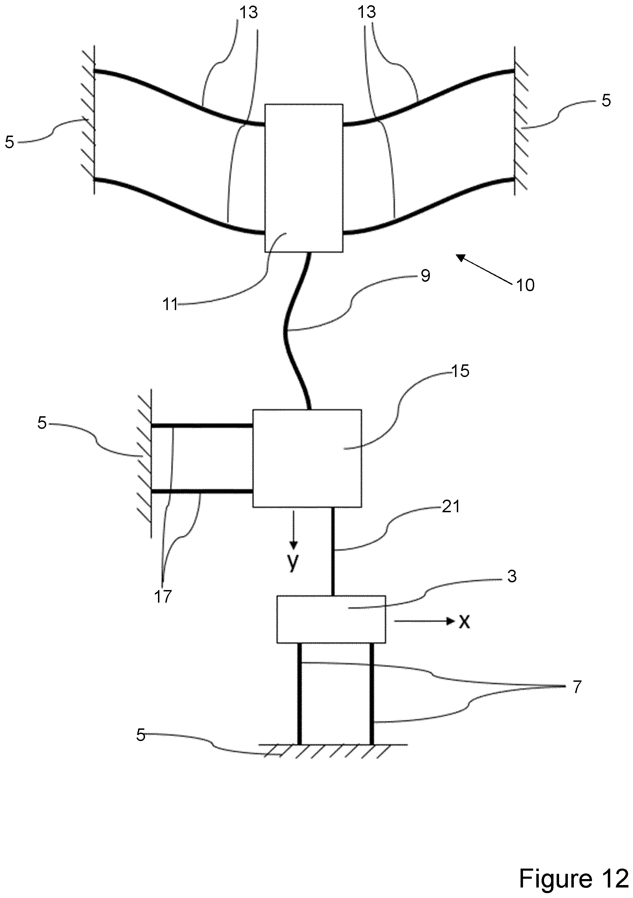

Figure 12 illustrates, in its neutral position, a version of the embodiment of figure 9 with an entirely flexure-based construction, in which the guide arrangement 7 and the secondary guide arrangement 17 are each constructed as parallel pairs of blade flexures so as to permit the first body 3 and the intermediate body 15 to translate in their respective directions (in the x direction for the first body 3 and in the y direction for the intermediate body 15), and which each have an intrinsic positive stiffness supplying a restoring force tending to return the respective body 3, 15 to its neutral position (with the flexures of the guide arrangements 7, 17 being straight). Connecting body 21 is also illustrated as a blade flexure. It should be noted that the flexures of the guide arrangements 7, 17 and of the connecting body 21 may all be replaced by their well-known equivalents, and blade flexures are not to be construed as being limiting.

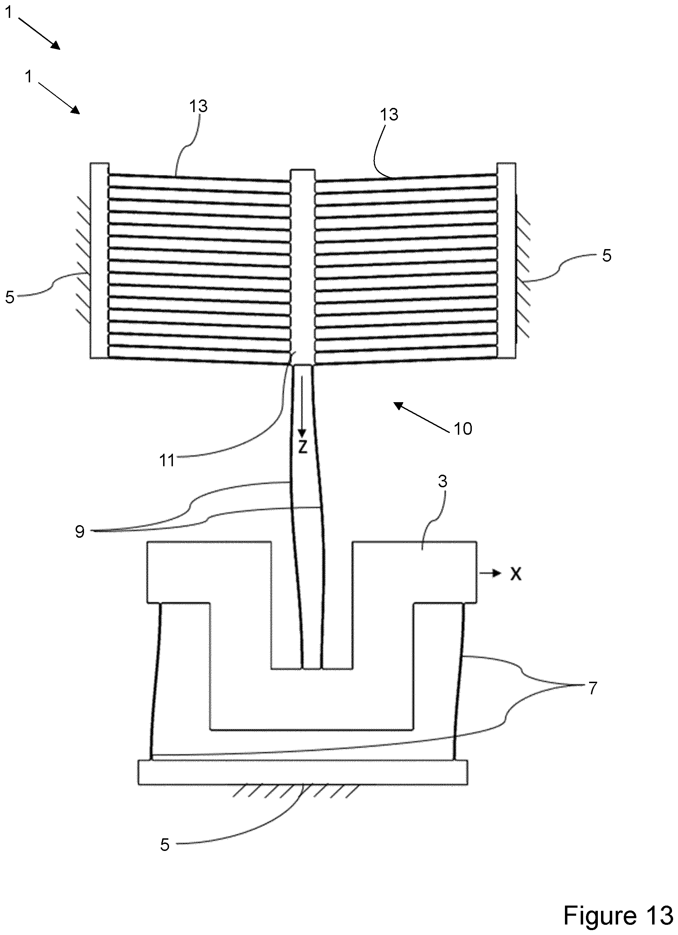

Figure 13 illustrates a version of the embodiment of figures 1-4, in which 32 preloading beams 13 are provided, arranged in symmetrical pairs, and where the guide arrangement is a pair of blade flexures, similarly to in figure 12 and to which the same comments regarding equivalents apply. First body 3 is illustrated as displaced towards the right from its neutral position.

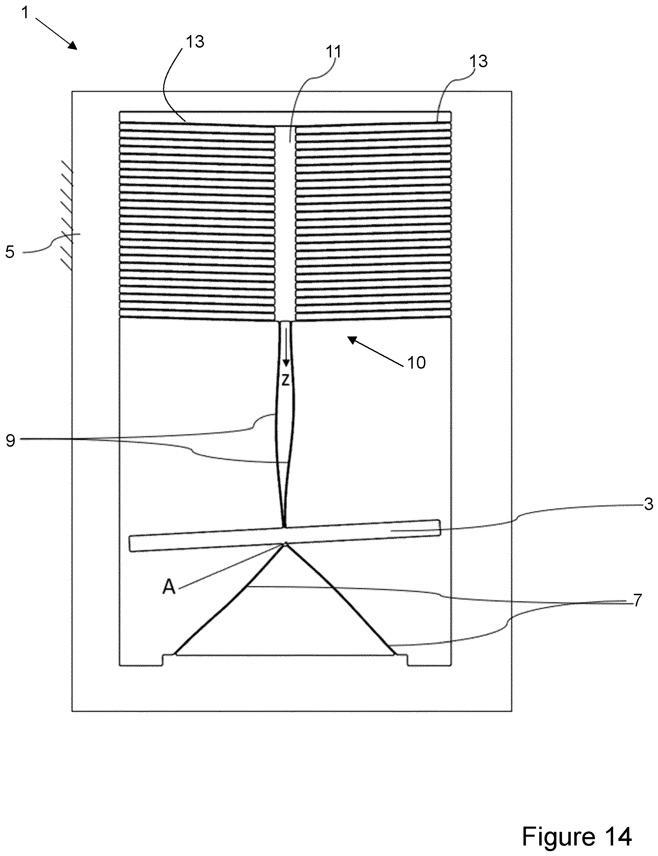

Figure 14 illustrates a version of the embodiment of figure 5, with the first body 3 displaced from its neutral position in anticlockwise rotation. In this variant, 32 preloading beams 13 are again provided, arranged in symmetrical pairs, and the guide arrangement 7 is a pair of blade flexures, arranged as an RCC pivot defining rotation axis A and having an intrinsic positive stiffness tending to return first body to its neutral position, in which the blade flexures of the guide arrangement 7 are straight. Second body 5 is illustrated as a frame. Such an all-flexure embodiment can be manufactured by etching on a wafer with the buckled beams 9 and preloading beams 13 unstressed, a treatment being applied (oxidation, ion implantation or similar) to generate residual stress tending to lengthen the preloading beams 13 and cause the preloading body 11 to approach the axis of rotation A.

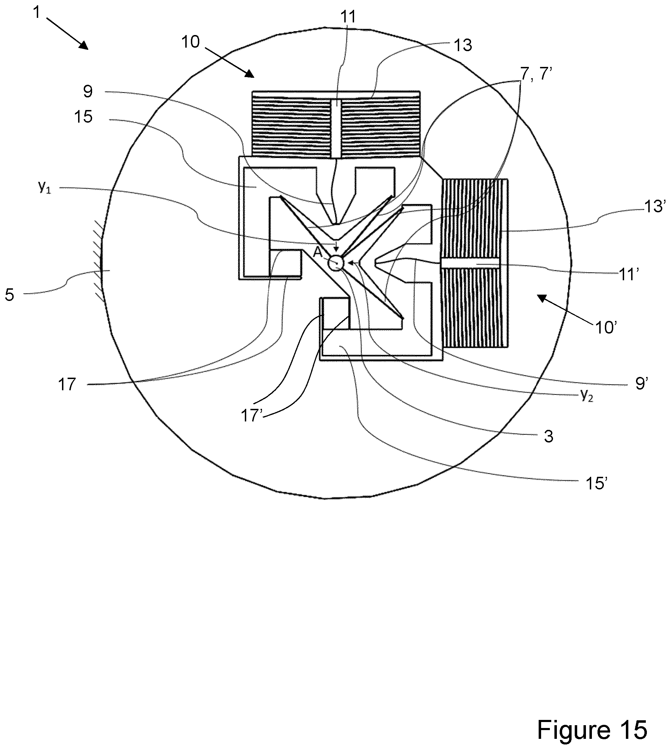

Figure 15 illustrates a further embodiment of a mechanism 1 according to the invention in its neutral position, intended to be part of an oscillator based upon that disclosed in WO2020/016131 and incorporating the principles of the present invention.

First body 3 is arranged centrally, within an opening provided in second body 5, which is of disc shape. First body 3 is suspended via a pair of guide arrangements 7, 7' each arranged as an RCC pivot extending from a pair of intermediate bodies 15, 15'. Each intermediate body 15, 15' is connected to the second body 5 via a pair of corresponding secondary guide arrangements 17, 17' each arranged as a pair of parallel blade flexures as in the embodiment of figure 12 so as to confer substantially one degree of freedom in translation to each of said intermediate bodies 15, 15'. Each intermediate body 15, 15' is connected to a corresponding buckled beam 9, 9' and a preloading structure as in figures 13 and 14, such that the preloading structures 10, 10' as previously described (this naturally also applies to the embodiments of the remaining figures) are arranged to act substantially perpendicularly to each other. Since the intermediate bodies 15, 15' move in translation by a displacement substantially directed along the axis of buckled beams 9, 9' and this displacement being of second order with respect to first body 3, the same principle of stiffness reduction applies, similar to the embodiment presented in figure 9.

When incorporated into an oscillator, an inertial mass is fixed to the first body 3 and the second body 5 is fixed to a frame element, or vice-versa.

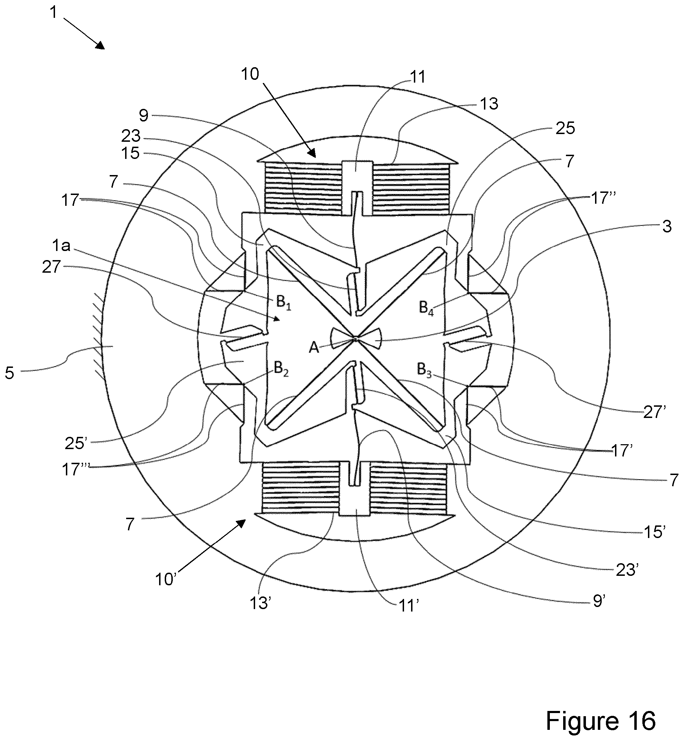

Figure 16 illustrates a further embodiment of a mechanism 1 according to the invention in its neutral position, intended to be part of an oscillator based upon that disclosed in WO2024100597A1 and incorporating the principles of the present invention, again arranged as an oscillator in which the first body 3, arranged within the interior 1a of the mechanism 1, is provided with one degree of freedom in rotation about axis A with respect to the second body, which is fixed. As before, the opposite arrangement is possible, as in first body 3 is fixed and second body 5 is arranged to pivot with respect thereto.

The first body 3 is pivotally mounted to each of the intermediate bodies 15, 15' and the secondary intermediate bodies 25, 25' by a guide arrangement 7 comprising four blade flexures, each linking the first body 3 to one of the intermediate bodies 15, 15' or the secondary intermediate bodies 25, 25', arranged in a symmetrical fashion when the mechanism 1 is in its neutral position. Each of the intermediate bodies 15, 15' and the secondary intermediate bodies 25, 25' is pivotally mounted to the second body 5 via corresponding secondary guide arrangements 17, 17', 17", 17'", each being an RCC pivot permitting a single degree of freedom in rotation about a corresponding axis of rotation B₁, B₂, B₃, B₄ as illustrated.

A first of the intermediate bodies 15 is linked to a first of the secondary intermediate bodies 25 via a coupling beam 23, and to a second of the secondary intermediate bodies 25' via a further coupling beam 27, here illustrated as a blade flexure but as noted previously, other equivalents are also possible as mentioned in WO2024100597A1. Likewise, a second of the intermediate bodies 15' is linked to the second of the secondary intermediate bodies 25' via another further coupling beam 23', and to the first of the secondary intermediate bodies 25 via another further coupling beam 27'. It should be noted that the point of attachment of the first further coupling beam 27 to the first intermediate body 15 is situated closer to the axis A than its point of attachment to the second coupling body 25', whereas the point of attachment of the second further coupling beam 27' to the second intermediate body 15' is situated closer to the axis A than its point of attachment to the first secondary intermediate body 25, but other arrangements are possible according to the requirements of the constructor.

In the illustrated arrangement, the two preloading structures 10, 10' are attached to the second body 5 such that they are arranged directly facing each other, each respective buckled beam 9, 9' being attached to a respective intermediate body 15, 15'. First and second secondary intermediate bodies 25, 25' are not directly connected to a preloading structure, in this embodiment. Nevertheless, it should also be noted that further preloading structures and buckled beams can be integrated if desired.

As a result of the illustrated arrangement, each of the secondary bodies 15, 15' moves quadratically in rotation around the corresponding axis of rotation B₁, B₃ with respect to the displacement of the first body 3 around axis A. Since each of the buckled beams 9, 9' applies a relatively constant moment on the secondary bodies 15, 15' the stiffness constant of the mechanism 1 can be reduced by applying the same principle as explained with embodiment presented in figure 11. The nonlinearities of the load case of the various buckled beams 9, 9' can be manipulated to adjust the isochronism defect of the mechanism 1 when used as an oscillator, applying the principles disclosed in EP 3 722 888 (mentioned above).

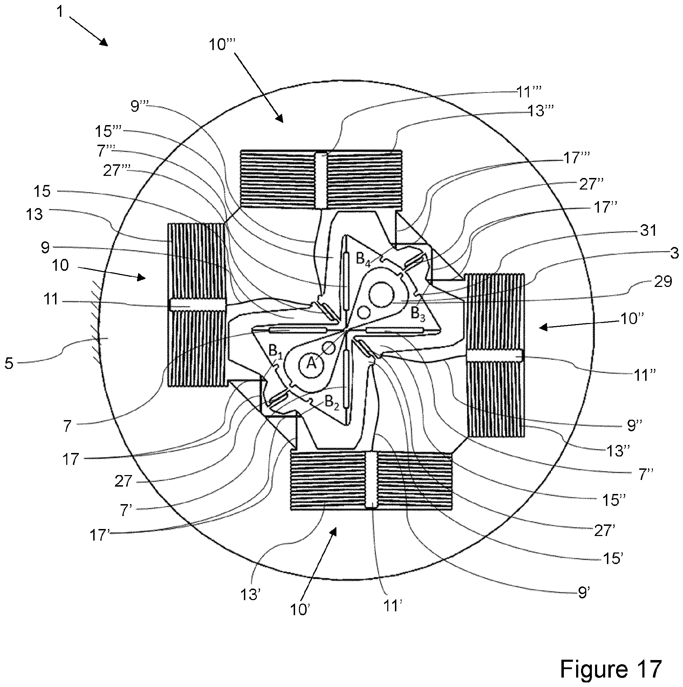

Figure 17 illustrates a further variant of a mechanism 1 according to the invention, again suitable for use in an oscillator, for which mounting holes 29 are provided in the first body 3 in order to attach an extra inertial mass (not illustrated) thereto.

Similarly to the embodiment of figure 16, the first body 3 is suspended from a plurality of intermediate bodies 15, 15', 15", 15‴ by a guide arrangement comprising a plurality of flexures 7, 7', 7", 7‴ each extending from the first body 3 to a corresponding intermediate body 15, 15', 15", 15‴ so as to define an axis of rotation A for the first body 3 with respect to the second body 5, the opposite arrangement being possible as before. In this figure, the flexures 7, 7', 7", 7‴ comprise rigid bars extending between blades, but other equivalents are naturally possible, such as simple blade flexures.

Each intermediate body 15, 15', 15", 15‴ is pivotally mounted to the second body 5 by a corresponding secondary guide arrangement 17, 17', 17", 17‴ defining a corresponding axis of rotation B₁, B₂, B₃, B₄. The first intermediate body 15 is linked to the second intermediate body 15' by a first coupling beam 27, the second intermediate body 15' is linked to the third intermediate body 15" by a second coupling beam 27', the third intermediate body 15" is linked to the fourth intermediate body 17‴ by a third coupling beam 27", and the third intermediate body 15" is linked to the first intermediate body 15 by a fourth coupling beam. Finally, each intermediate body 15, 15', 15", 15‴ is linked to a corresponding preloading structure 10, 10', 10", 10‴ by a corresponding buckled beam 9, 9', 9", 9‴ as before.

Finally, in order to prevent an excessive amplitude of rotation of the first body 3, overtravel stops 31 are provided on the intermediate bodies 15, 15', 15", 15'", which cooperate with corresponding stops on the first body 3, but these can be omitted if not necessary.

Similarly, to limit the displacement of at least one preloading body 11 to a constant amplitude (along respective axis z), overtravel stops attached to the second body 5 can be provided to make contact with the at least one preloading body 11 after prestress is applied. This has the advantage of accurately controlling the displacement amplitude of the at least one preloading body 11 and thus the load case of the at least one preloaded buckled beam 9 even if the prestress level is not fully controlled during the manufacturing process.

The exact geometry of the various components of the mechanism 1 are clearly visible in the figure, and can be varied according to the needs of the constructor while retaining the degree of freedom in rotation about axis A for the first body 3, and around the respective axes of rotation B₁, B₂, B₃, B₄ for the respective intermediate bodies 15, 15', 15", 15‴.

Although the invention has been described in reference to specific embodiments, variations are possible without departing from the scope of the invention as defined in the appended claims.

## Claims

**1.** Flexure based mechanism (1), comprising:
- a first body (3) supported on a second body (5) by a guide arrangement (7) comprising at least one flexure arranged so as to permit said main body (3) to displace relatively to said second body (5) from a neutral position according to at least one degree of freedom and subject to a restoring force acting in said at least one degree of freedom and directed towards said neutral position, one of said first body (3) and said second body (5) being a fixed support;
- at least one preloaded buckled beam (9) arranged to apply a compensating force to said first body (3), said compensating force having a component acting in said at least one degree of freedom in a positive proportional relationship to a displacement of said first body (3) from said neutral position;
**characterised in that** said at least one preloaded buckled beam (9) is attached to a preloading structure (10) comprising a preloading body (11) supported by at least two preloading beams (13) preloaded so as to apply said compensating force, said at least two preloading beams (13) extending from opposite sides of said preloading body (11) in a chevron configuration, said chevron configuration defining an apex directed towards said at least one preloaded buckled beam (9).

**2.** Flexure based mechanism (1) according to the preceding claim, wherein said preloading beams (13) are arranged symmetrically.

**3.** Flexure based mechanism (1) according to any preceding claim, wherein said at least one degree of freedom is in translation substantially perpendicular to the direction in which said compensating force is applied to said first body (3) when in its neutral position.

**4.** Flexure based mechanism (1) according to claim 1 or 2, wherein said at least one degree of freedom is in rotation about an axis (A), said at least one preloaded buckled beam (9) being attached to said first body such that the direction in which said compensating force is applied to said first body (3) when in its neutral position is directed substantially towards said axis (A).

**6.** Flexure based mechanism (1) according to any preceding claim, further comprising an intermediate body (15) upon which said compensating force acts, said intermediate body (15) being linked to said first body (3) by a connecting body (21) and supported on said second body (5) by a secondary guide arrangement (17) adapted to provide substantially one degree of freedom in rotation or in translation to said intermediate body (15).

**7.** Flexure based mechanism (1) according to any preceding claim, further comprising a further preloaded buckled beam (9') arranged to apply a further compensating force to said first body (3), under the effect of a further preloading structure (10') comprising a further preloading body (11') supported by at least two further preloading beams (13') preloaded so as to cause said further preloaded buckled beam (9') to apply said further compensating force, said at least two further preloading beams (13') extending from opposite sides of said further preloading body (11'), in a chevron configuration, said chevron configuration defining an apex directed towards said at least one further preloaded buckled beam (9').

**8.** Flexure based mechanism (1) according to the preceding claim, further comprising a further intermediate body (15') upon which said further compensating force acts, said further intermediate body (15') being linked to said first body (3) and being supported on said second body by a further secondary guide arrangement (17') adapted to provide substantially one degree of freedom in rotation or in translation to said further intermediate body (15').

**9.** Flexure based mechanism (1) according to the preceding claim, wherein said intermediate body (15) is linked to a first secondary intermediate body (25) by a first coupling beam (23) and to a second secondary intermediate body (25') by a first further coupling beam (27), said further intermediate body (15') being linked to said first secondary intermediate body (25) by a second further buckled beam (9') and to said first further intermediate body (25) by a second further coupling beam (27'), said guide arrangement (7) comprising a plurality of flexures extending from said first body (3) to a respective each of said intermediate body (15), further intermediate body (15'), first secondary intermediate body (25) and second secondary intermediate body (25'), each of said intermediate bodies (15, 15') and said secondary intermediate bodies (25, 25') being supported on said second body (5) by a corresponding secondary guide arrangement (17, 17', 17", 17‴) arranged to provide substantially one degree of freedom in rotation.

**10.** Flexure based mechanism (1) according to claim 8, wherein four intermediate bodies (15, 15', 15", 15‴) are provided distributed around an axis of rotation (A) of said first body (3), each intermediate body (15, 15', 15", 15‴) being linked to a corresponding preloaded buckled beam (9, 9', 9", 9‴) attached to a corresponding preloading structure (10, 10', 10", 10‴) and each provided with a corresponding secondary guide arrangement (17, 17', 17", 17‴) arranged to provide substantially one degree of freedom in rotation to each corresponding intermediate body (15, 15', 15", 15‴), each intermediate body (15, 15', 15", 15‴) being linked to each of the two intermediate bodies (15, 15', 15", 15‴) adjacent thereto by a corresponding coupling beam (27, 27', 27", 27‴), said guide arrangement (7) comprising a plurality of flexures, a corresponding flexure extending between each intermediate body (15, 15', 15", 15‴) and said first body (1).

**11.** Flexure-based mechanism (1) according to any preceding claim, wherein at least one of said guide arrangements (7, 7', 17, 17', 17", 17‴) and/or said connecting body (21), if present, is implemented by at least one flexure.

**12.** Flexure-based mechanism (1) according to any preceding claim, constructed of surface-treated silicon.

**13.** Horological oscillator comprising a flexure-based mechanism (1) according to any preceding claim.

**14.** Method of manufacturing a flexure based mechanism (1) according to any of claims 1-13, comprising steps of:
- fabrication of said flexure based mechanism (11) such that said preloading beams (13) are not preloaded;
- carrying out a surface treatment of said preloading beams (13) so as to induce residual stress therein and thereby to preload said preloading beams (13).

**15.** Method according to the preceding claim, wherein said at least one buckled beam (9) is curved in a predetermined direction when said preloading beams (13) are not preloaded.
